# EUROPEAN PATENT SPECIFICATION

(11) **EP 1 219 878 B1**
(45) Date of publication and mention of the grant of the patent: **26.10.2005**
(21) Application number: 01660208.8
(22) Date of filing: 19.11.2001
(51) Int. Cl.: F16K 31/60

(54) **Lever tap**
Hebelhahn
Robinet à levier

(30) Priority: 29.12.2000 FI 20002880
(43) Date of publication of application: 03.07.2002
(73) Proprietor: ORAS OY, 26101 Rauma (FI)
(72) Inventor: Saarisalo, Risto, 27230 Lappi (FI); Koppanen, Jorma, 26660 Rauma (FI)
(74) Representative: Saijonmaa, Olli-Pekka

(56) References cited:
- EP-A- 0 643 246
- DE-A- 3 815 901
- US-A- 4 932 433

## Description

This invention relates to a lever tap, comprising a stationary body, as well as a lever pivotable relative to an articulation and rotatable about its axis and provided with a handle for adjusting a flow passing through the tap.

In a typical manually operated water tap for a shower or a lavatory basin, a handle for adjusting the volume and temperature of water to be received from the tap is mounted on a spindle which transmits handle movements to a mechanism inside the tap body, used for controlling the mixing of cold and warm water taking place within the tap, as well as the through-flow of water. The spindle extending into the body can be enclosed at the end of the body by a curved protective cap, and the handle attached as an extension of the spindle can have its end designed as a dome which has its collar, during a movement of the handle, tracing along the surface of the body protective cap, such that these elements together mask the spindle and the internal elements of the tap body out of sight. On the one hand, the objective is to protect the functional elements of a tap and, on the other hand, to make the tap aesthetically acceptable in terms of its appearance.

In the above type of prior art taps, however, a gap shall remain between the end of a stationary body and the movable lever, which results in incomplete protection of internal body elements. Particularly in a shower application, a problem is caused by splash water penetrating through the gap to tap adjustment mechanisms, and an even more difficult problem results from detergents migrating through the gap inside the body during a tap cleaning process. The tap adjustment mechanism comprises elements moving against each other, which are gradually corroded by aggressive detergents causing a play in the movements and impairing tap actions. The adjustments of water temperature and a flow rate become inaccurate, nor can the tap be completely shut any longer and it develops a leak.

US 4 932 433 describes a lever tap with a protective cap at the end of the valve body and a thin semi-spherical cap (packing) mounted about the lever and sliding over the semi-spherical exterior surface of the valve body. This prevents dirt from penetrating into the interior of the valve but does not solve the problem of penetrating dirt and water into the space between handle and valve body.

It is an object of the invention to provide a solution, which eliminates the above-described drawback of currently available taps. The inventive concept is to equip the lever with a co-movable packing, such that the sealing of a clearance between the lever and the stationary tap body is based on a relative contact between the annular collar and the spherically curved surface lying against it. Thus, the invention comprises a tap, which is characterized in that the body has its end provided with a protective cap enclosing the lever and including a spherically curved surface, and that the lever is provided with a co-movable packing, having its annular collar adapted to trace along the curved surface of the protective cap for sealing a clearance between the body end and the lever. The invention comprises as well an alternative tap, which is characterized in that the lever is provided with a co-movable, spherically curved packing, which is in a sealing contact with a lever-enclosing annular end of the body for sealing a clearance between the body end and the lever.

According to a particularly preferred embodiment of the invention, which combines the above alternative solutions, the protective cap at the end of a body and the movable packing included in a lever are both designed in a spherically curved shape complementary to each other.

The invention has accomplished the fact that the end of a tap body and the packing carried by a lever are tangential to each other in all handle positions, such that the packing seals a clearance between the body and the lever regardless of a handle position. Thus, the access of splash or wash waters and detergents into intra-body adjustment mechanisms is effectively denied.

Suitable packing materials include elastic rubbers and plastics. The packing may consist of e.g. an elastic film, having a thickness of about 1mm.

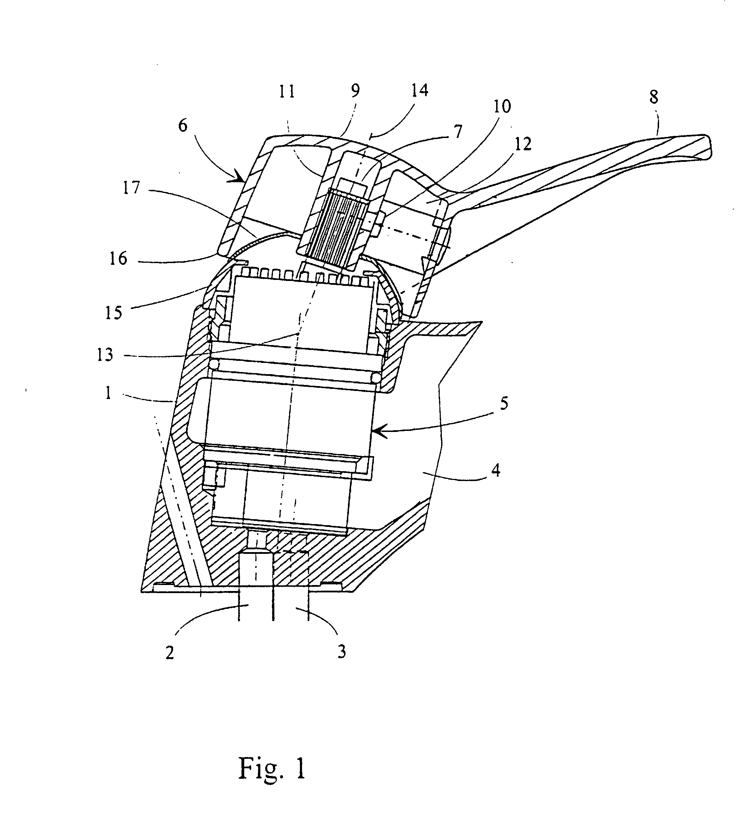

The invention will now be illustrated by way of example, which describes a lever tap applicable e.g. as a service water tap for a wash basin or a shower and depicted in fig. 1 of the accompanying drawing.

The lever tap shown in fig. 1 comprises a stationary body 1, which is provided with inlet ducts 2, 3 for cold and hot water, as well as with an outlet duct 4 for water received from the tap. An adjustment mechanism fitted in a space defined by the body 1 for mixing cold and hot water and for adjusting a flow rate coming from the tap, is designated in the figure generally with reference numeral 5. Such mechanisms are commonly known and, thus, are not described further at this time.

The lever for actuating the adjustment mechanism 5, which is designated generally with reference numeral 6, comprises a rod-like spindle 7, as well as a handle 8 functioning as an extension thereof and expanding at its end closer to the spindle to provide a dome 9 covering the end of the body 1. As shown in the figure, the spindle 7 has its end fastened with a screw 10 to a socket-like boss 11 internal of the dome 9. Between the boss 11 and the inner surface of the dome 9 are provided radial bracing ribs 12.

In terms of its operation, the tap is based on movements of the lever 6, which is why the spindle 7 is articulated to stationary tap elements to be pivotable relative to an articulation 13, and also rotatable about its longitudinal axis 14. Turning the lever relative to the articulation 13 by lifting or lowering the lever from the handle 8 adjusts the flow rate of water received from the tap, and manipulating the handle laterally rotates the lever about the axis 14 for adjusting the received water as to its temperature.

The tap body 1 has its end closer to the handle 8 underneath the dome 9 provided with a protective cap 15 including a spherically curved surface. The surface has its centre of curvature defined by the articulation 13 of the lever 6. In the process of maneuvering the lever 6, the dome 9 has its bottom rim 16 tracing along the surface of the protective cap 15 at a small distance therefrom. In order to prevent a clearance between the dome collar 16 and the protective cap 15 from allowing water, dirt, or corrosive detergents to penetrate inside the body 1 and damage the adjustment mechanisms 5, between the protective cap 15 and the lever 6 is arranged, according to the invention, a packing 17 designed for a curvature complementary to the protective cap. The packing 17, which is made of a thin, elastic rubber or plastic film, is packed in the middle around the socket-like boss 11 of the dome 9 so as to receive support from the radial ribs 12. The packing 17 has its peripheral areas in all positions of the lever 6 in a tight contact with the curved surface of the body protecting cap 15, the packing sliding therealong as the lever 6 is being maneuvered. Hence, the packing 17 protects the adjustment mechanisms 5 and other stationary elements inside the body 1 in all conceivable positions of the lever 6 within its operating range.

It is obvious for a person skilled in the art that various embodiments of the invention are not limited to the above-detailed example, but may fluctuate within the scope of the appended claims. For example, the packing 17 may differ in terms of its shape from what has been described above, as long as its periphery or peripheral areas are provided with a collar which rests gaplessly against the spherical surface of the protective cap 15 and, as the lever is moving, traces therealong for maintaining a continuous tightness. On the other hand, it is conceivable that the packing 17 is spherically curved as stated above, but the tap body 1 has only its end constituting a collar which is in a continuous sealing linear contact with the spherical surface of the packing. The lever may also have its handle 8 and dome 9 designed in a manner other than what was described above, and it is conceivable that the packing 17 is not deposited on the dome boss 11 but, instead, on the rod-like spindle 7 extending through its centre.

## Claims

1. A lever tap, comprising a stationary body (1) with a protective cap (15) at the end of the body, as well as a lever (6) pivotable relative to an articulation (13) and rotatable about its axis (14), provided with a handle (8) for adjusting a flow passing through the tap and with a co-movable packing (17) made of an elastic rubber or plastic film, **characterized in that** the protective cap (15) of the body (1) has a spherically curved surface, that the lever (6) has a dome (9) covering the end of the body, the bottom rim (16) of the dome tracing along the curved surface of the cap during maneuvering of the lever, the packing (17) having its annular collar adapted to trace along the curved surface of the protective cap for sealing a clearance between the body end and the lever.

2. A lever tap as set forth in claim 1, **characterized in that** the packing (17) is designed for a curvature complementary to the surface of the protective cap (15).

3. A lever tap, comprising a stationary body (1) with a protective cap (15) at the end of the body, as well as a lever (6) pivotable relative to an articulation (13) and rotatable about its axis (14), provided with a handle (8) for adjusting a flow passing through the tap and with a co-movable, spherically curved packing (17) made of an elastic rubber or plastic film, **characterized in that** the lever (6) has a dome (9) covering the end of the body (1), the bottom rim (16) of the dome tracing along the surface of the protective cap (15) of the body during maneuvering of the lever (6), the packing (17) being in a sealing contact with the protective cap (15) of the body for sealing a clearance between the body end and the lever.

4. A lever tap as set forth in claim 3, **characterized in that** the protective cap (15) has its surface provided with a curvature complementary to the packing (17).

5. A lever tap as set forth in any of the preceding claims, **characterized in that** the packing (17) is made of a film, having a thickness of about 1 mm.

6. A lever tap as set forth in any of the preceding claims, **characterized in that** the lever (6) includes a spindle (7), which is pivotable relative to the articulation (13) and rotatable about its longitudinal axis (14), and on the end of which is mounted a handle (8) by socket-like boss (11), and that the packing (17) is deposited on the boss for sealing a clearance between the latter and the protective cap (15).

7. A lever tap as set forth in claims 5 and 6, **characterized in that** the boss (11) is surrounded by radial ribs (12), the spherically curved packing (17) resting against the latter.

8. A lever tap as set forth in any of the preceding claims, **characterized in that** the tap is a service water tap, such as a shower tap.

## Patentansprüche

1. Hebelhahn, der einen stationären Körper (1) mit einer Schutzkappe (15) am Ende des Körpers, sowie einen Hebel (6) umfasst, der in Bezug auf ein Gelenk (13) schwenkbar ist und um seine Achse (14) herum drehbar ist, an welchem ein Griff (8) zum Einstellen eines durch den Hahn tretenden Stromes vorgesehen ist, und mit einer gleichzeitig bewegbaren Dichtung (17), die aus einer elastischen Gummi- oder Kunststoffschicht hergestellt ist,
**dadurch gekennzeichnet, dass**
die Schutzkappe (15) des Körpers (1) eine kugelförmig gebogene Oberfläche aufweist, dass der Hebel (6) eine Wölbung (9) aufweist, die das Ende des Körpers abdeckt, wobei der untere Rand (16) der Wölbung sich während der Handhabung des Hebels auf der gebogenen Oberfläche der Kappe entlang bewegt, wobei der ringförmige Kragen der Dichtung (17) dazu angepasst ist, entlang der gebogenen Oberfläche der Schutzkappe zu gleiten, um einen Spielraum zwischen dem Ende des Körpers und dem Hebel abzudichten.

2. Hebelhahn nach Anspruch 1,
**dadurch gekennzeichnet, dass** die Dichtung (17) für eine zur Oberfläche der Schutzkappe (15) komplementäre Krümmung gestaltet ist.

3. Hebelhahn, der einen stationären Körper (1) mit einer Schutzkappe (15) am Ende des Körpers, sowie einen Hebel (6) umfasst, der in Bezug auf ein Gelenk (13) schwenkbar ist und um seine Achse (14) herum drehbar ist, an welchem ein Griff (8) zum Einstellen eines durch den Hahn tretenden Stromes vorgesehen ist, und mit einer gleichzeitig bewegbaren, kugelförmig gebogenen Dichtung (17), die aus einer elastischen Gummi- oder Kunststoffschicht hergestellt ist;
**dadurch gekennzeichnet, dass**
der Hebel (6) eine Wölbung (9) aufweist, die das Ende des Körpers (1) abdeckt, wobei der untere Rand (16) der Wölbung sich während der Handhabung des Hebels (6) auf der Oberfläche der Schutzkappe (15) des Körpers entlang bewegt, wobei sich die Dichtung (17) in abdichtendem Kontakt zu der Schutzkappe (15) des Körpers befindet, um einen Spielraum zwischen dem Ende des Körpers und dem Hebel abzudichten.

4. Hebelhahn nach Anspruch 3,
**dadurch gekennzeichnet, dass** die Oberfläche der Schutzkappe (15) eine Krümmung komplementär zu der Dichtung (17) aufweist.

5. Hebelhahn nach einem der vorhergehenden Ansprüche,
**dadurch gekennzeichnet, dass** die Dichtung (17) aus einer Schicht mit einer Dicke von etwa 1 mm hergestellt ist.

6. Hebelhahn nach einem der vorhergehenden Ansprüche,
**dadurch gekennzeichnet, dass** der Hebel (6) eine Spindel (7) umfasst, die in Bezug auf das Gelenk (13) schwenkbar ist und um ihre Längsachse (14) drehbar ist und an deren Ende mittels eines buchsenartigen Vorsprungs (11) ein Griff (8) montiert ist, und dass die Dichtung (17) an dem Vorsprung angeordnet ist, um einen Spielraum zwischen letzterem und der Schutzkappe (15) abzudichten.

7. Hebelhahn nach Anspruch 5 und 6,
**dadurch gekennzeichnet, dass** der Vorsprung (11) von radialen Rippen (12) umgeben ist, wobei die kugelförmig gebogene Dichtung (17) an letzteren anliegt.

8. Hebelhahn nach einem der vorhergehenden Ansprüche,
**dadurch gekennzeichnet, dass** der Hahn ein Hauswasserhahn wie etwa ein Duschhahn ist.

## Revendications

1. Un robinet à levier comprenant un élément fixe (1) avec un capuchon de protection (15) placé sur l'extrémité de l'élément fixe, ainsi qu'un levier (6) pivotant par rapport à une articulation (13) et tournant autour de son axe (14), doté d'une poignée (8) utilisable pour régler le débit circulant par le robinet et avec une garniture (17) se déplaçant solidairement consistant en un caoutchouc élastique ou en un film plastique, **caractérisé par le fait que** le capuchon de protection (15) de l'élément fixe (1) présente une surface incurvée de façon sphérique, que le levier (6) est doté d'un dôme (9) recouvrant l'extrémité de l'élément fixe, le bord inférieur (16) du dôme suivant la surface incurvée du capuchon pendant la manipulation du levier, la garniture (17) ayant un collier annulaire adapté pour suivre la surface incurvée du capuchon de protection afin de colmater de façon étanche l'espace situé entre l'extrémité de l'élément fixe et le levier.

2. Un robinet à levier selon la revendication 1, **caractérisé par le fait que** la garniture (17) est conçu pour que sa courbure soit complémentaire de celle de la surface du capuchon de protection (15).

3. Un robinet à levier, comprenant un élément fixe (1) avec un capuchon de protection (15) placé sur l'extrémité de l'élément fixe, ainsi qu'un levier (6) pivotant par rapport à une articulation (13) et tournant autour de son axe (14), doté d'une poignée (8) utilisable pour régler le débit circulant par le robinet et avec une garniture (17) avec une surface incurvée de façon sphérique et se déplaçant solidairement et consistant en un caoutchouc élastique ou en un film plastique, **caractérisé par le fait que** le levier (6) comporte un dôme (9) recouvrant l'extrémité de l'élément fixe (1), le bord inférieur (16) du dôme suivant la surface du capuchon de protection (15) de l'élément pendant la manipulation du levier (6), la garniture (17) garantissant un contact étanche avec le capuchon de protection (15) de l'élément fixe, afin de colmater de façon étanche l'espace situé entre l'extrémité de l'élément fixe et le levier.

4. Un robinet à levier selon la revendication 3, **caractérisé par le fait que** la surface du capuchon de protection (15) présente une courbure complémentant à celle de la garniture (17).

5. Un robinet à levier selon l'une des revendications précédentes, **caractérisé par le fait que** la garniture (17) consiste en un film d'une épaisseur d'environ 1 mm.

6. Un robinet à levier selon l'une des revendications précédentes, **caractérisé par le fait que** le levier (6) comprend une tige (7), qui pivote par rapport à l'articulation (13) et qui tourne autour de son axe longitudinal (14), et sur l'extrémité de laquelle une poignée (8) est montée au moyen d'un bossage en forme de douille (11), et **caractérisé par le fait que** la garniture (17) est posée sur le bossage afin de colmater de façon étanche l'espace situé entre ce dernier et le capuchon de protection (15).

7. Un robinet à levier selon les revendications 5 et 6, **caractérisé par le fait que** le bossage (11) est entouré de nervures radiales (12), la garniture incurvée de forme sphérique (17) reposant contre ces dernières.

8. Un robinet à levier selon l'une des revendications précédentes, **caractérisé par le fait que** le robinet est un robinet d'eau de service, comme un robinet de douche.
